Europäisches Patentamt

**European Patent Office**

**Office européen des brevets**

(19)

(11) Numéro de publication: **0 022 412**
**B1**

(12)

# FASCICULE DE BREVET EUROPEEN

(45) Date de publication du fascicule du brevet: **19.10.83**

(51) Int. Cl.³: **H 04 N 9/535, H 04 N 5/16**

(21) Numéro de dépôt: **80401017.1**

(22) Date de dépôt: **04.07.80**

(54) **Procédé d'élaboration et de correction automatiques de la tension de blocage d'un canon à électrons et dispositif pour la mise en oeuvre de ce procédé.**

(30) Priorité: **09.07.79 FR 7917708**

(43) Date de publication de la demande:
**14.01.81 Bulletin 81/2**

(45) Mention de la délivrance du brevet:
**19.10.83 Bulletin 83/42**

(84) Etats contractants désignés:
**AT BE CH DE GB IT LI LU NL SE**

(56) Documents cités:
**DE - A - 2 702 817**
**US - A - 3 855 614**

(73) Titulaire: **VIDEOCOLOR Société Anonyme**
**Périsud 7, boulevard Romain Rolland**
**F-92128 Montrouge (FR)**

(72) Inventeur: **Lavigne, André**
**48, rue de l'Avenir**
**F-93130 Noisy Le Sec (FR)**

(74) Mandataire: **Thrierr, Françoise et al,**
**THOMSON-CSF SCPI 173, Bld Haussmann**
**F-75379 Paris Cedex 08 (FR)**

Courier Press, Leamington Spa, England.

Procédé d'élaboration et de correction automatiques de la tension de blocage d'un
canon à électrons et dispositif pour la mise en oeuvre de ce procédé

L'invention concerne un procédé de correction de tension de blocage du ou des canons à électrons d'un tube cathodique et un dispositif correspondant. L'invention trouve son application d'intérêt maximum dans la correction automatique de la tension de blocage des trois canons à électrons d'un tube de télévision couleur.

Si on considère un canon à électrons d'un tube de télévision, on sait que l'intensité du faisceau électronique engendré par ce canon dépend des potentiels appliqués sur les électrodes de ce canon. Le signal de modulation vidéo destiné à faire varier l'intensité du faisceau est appliqué à l'une des électrodes du canon. Il est à noter que l'invention s'applique particulièrement aux systèmes dans lesquels le signal de modulation est appliqué à la cathode. Le signal appliqué sur cette électrode est fourni par un amplificateur et est constitué d'une composante continue de valeur constante à laquelle est superposé le signal de modulation vidéo proprement dit. La composante continue, correctement réglée, est aussi appelée tension de blocage car c'est la tension qui permet de produire une image noire à la limite du gris (c'est-à-dire un courant de cathode d'intensité sensiblement nulle) lorsque le signal de modulation vidéo est nul. Autrement dit, la composante continue précitée qui est élaborée par l'amplificateur doit être égale à la tension d'extinction du canon à électrons, qui est la tension juste nécessaire pour que l'image soit noire mais à la limite de l'échelle des gris.

Or, on sait que la tension d'extinction du canon à électrons, qui est une valeur caractéristique de ce dernier, peut variet lentement au fur et à mesure de la durée de vie du tube cathodique. Par ailleurs, dans l'amplificateur, les moyens générateurs de la tension de blocage peuvent présenter des dérives et l'image peut devenir trop lumineuse ou trop sombre. Dans un récepteur de télévision en couleurs, ce phénomène a des conséquences plus graves étant donné que ces dérives lentes peuvent affecter les trois canons dans des proportions différentes, ce qui se traduit par un déséquilibre dans le dosage des trois couleurs fondamentales.

On a déjà proposé, notamment dans la demande de brevet eurofréen No. 4498 au nom de la demanderesse, publiée le 3.10.79, un système de correction automatique de la tension de blocage d'un canon à électrons, permettant une ré-évaluation périodique de la composante continue fournie par l'amplificateur, quelles que soient les causes de la dérive. En bref, ce système consistait en une boucle de contre-réaction de l'amplificateur agissant sur ce dernier pour corriger la polarisation continue de l'un de ses étages d'amplification et dont la grandeur d'entrée n'était autre que le courant cathodique lui-même mesuré pendant des périodes de mesure successives durant lesquelles il devait être théoriquement nul. La période de mesure ou période d'échantillonnage était choisie à la fin du retour trane pour pouvoir maintenir un signal de modulation nul à l'entrée de l'amplificateur. Comme la boucle de contre-réaction ne pouvait être couplée en permanence à la liaison établie entre la sortie de l'amplificateur et la cathode, un moyen commutateur était prévu pour rendre active cette boucle de contre-réaction seulement pendant les périodes de mesure successives; un moyen formant mémoire étant cependant relié à l'entrée de régulation de l'amplificateur pour maintenir la valeur de consigne (définissant la polarisation de l'étage concerné de l'amplificateur) entre deux périodes de mesure successives.

Ce système fonctionne de façon satisfaisante tant que certains courants de fuite dans le canon sont faibles. Or, certains tubes cathodiques présentent, par construction, un courant de fuite permanent, notamment entre cathode et filament, susceptible de fausser le fonctionnement de la boucle de contre-réaction en stabilisant la composante continue de l'amplificateur à une valeur différente de celle de la tension de blocage requise. L'invention propose, entre autres, une nouvelle conception de la boucle de contre-réaction permettant de prendre en compte ce problème supplémentaire. Plus exactement, l'invention conserve le principe de la régulation de la polarisation continue de l'amplificateur au moyen d'une boucle de contre-réaction comportant un moyen formant mémoire défini ci-dessus, mais modifie à la fois la structure de cette boucle de contre-réaction et son mode de fonctionnement séquentiel aboutissant à la ré-actualisation périodique de l'état du moyen formant mémoire.

Dans cet esprit, l'invention peut donc se définir comme un procédé de correction de la tension de blocage d'un canon à électrons, normalement modulé par sa cathode, par l'intermédiaire d'un amplificateur connecté à ladite cathode pour lui transmettre un signal de modulation et une composante continue, du type consistant à ré-ajuster périodiquement ladite composante continue par contre-réaction en chargeant périodiquement à une valeur de consigne actualisée un moyen formant mémoire de ladite contre-réaction, relié en permanence à des moyens de polarisation dudit amplificateur, caractérisé en ce qu'il consiste:

— à stabiliser momentanément le point de fonctionnement de l'amplificateur, au voisinage de la tension de blocage,
— à produire une perturbation du courant cathodique dudit canon à électrons, dans un sens tel que le canon passe à la conduction en dépassant brusquement le seuil du noir,
— à relever, dans l'amplificateur, un signal transitoire correspondant à ladite perturbation et à utiliser ce signal transitoire, sans composante continue, pour charger ledit moyen formant mémoire.

L'invention concerne également un dispositif de correction de la tension de blocage d'un canon à électrons normalement modulé par sa cathode, un amplificateur de signal de modulation ayant sa sortie reliée à ladite cathode: du type comportant une boucle de contre-réaction connectée à une entrée de régulation de la polarisation continue dudit amplificateur et comportant un moyen formant mémoire dont la sortie est reliée à ladite entrée de régulation pour imposer en permanence une grandeur électrique de consigne à ladite entrée de régulation; l'entrée dudit moyen formant mémoire étant connectée à un moyen interrupteur branché pour invalider cette entrée en dehors de périodes de mesure successives, caractérisé en ce qu'il comporte:

— un générateur de signal de stabilisation dont une sortie est reliée à l'entrée dudit amplificateur,
— un générateur de signal de perturbation de conduction dudit canon relié audit tube cathodique; les deux générateurs étant réglés et synchronisés pour que le signal de perturbation soit plus court en durée que le signal de stabilisation et qu'il survienne après l'apparition de ce dernier, et
— une liaison capacitive établie entre ladite boucle de contre-réaction et un élément choisi dudit amplificateur, sensible à une perturbation provoquée par ledit générateur de signal de pertubration.

Pour mieux comprendre la double définition de l'invention donnée ci-dessus, on considèrera le développement théorique suivant.

En première approximation, le courant de cathode Ik obéit à la loi de variation suivante:

$$Ik = K \, Vv^{2,7}$$

K, étant une constante et Vv la tension de modulation qui admet deux composantes:

$$Vv = Vco - Vi$$

où Vco est la tension de blocage précitée et Vi la tension instantanée résultant de la modulation. On voit donc que Ik s'annule en même temps que Vv. Le fonctionnement du système antérieur faisant l'objet de la précédente demande de brevet de la demanderesse, consistait à élaborer la tension de blocage recherchée en mesurant le courant cathodique à un instant et dans des conditions où il devait être théoriquement nul et à appliquer le signal d'erreur à l'entrée de régulation de l'amplificateur, par l'intermédiaire de la boucle de contre-réaction précitée. Malheureusement, comme indiqué précédemment, il peut exister un courant de fuite dans le canon à électrons et notamment entre la cathode et le filament de sorte que la véritable loi de variation du courant de cathode est en fait:

$$Ik = K \, Vv^{2,7} + Io$$

Io représentant le courant de fuite permanent.

L'idée de base de l'invention provient de la constatation que cette nouvelle loi de variation admet la même dérivée que la précédente (puisque Io est constant) et que cette dérivée s'annule aussi en même temps que Vv et Ik. Par conséquent, la régulation conforme à l'invention est fondée sur l'annulation de cette dérivée pour éliminer l'influence du courant de fuite Io.

Pour concrétiser cette idée de base, on définit donc un processus séquentiel aboutissant à la ré-actualisation périodique du moyen formant mémoire, par une liaison capacitive éliminant toute composante continue. Ce processus séquentiel comportant deux phases essentielles:

— une phase de préparation permettant de stabiliser le point de fonctionnement instantané de l'amplificateur, c'est-à-dire d'annuler la composante vidéo de modulation et,
— une phase de perturbation coïncidant avec la période de mesure pendant laquelle la boucle de contre-réaction est effectivement active, au cours de laquelle une perturbation de tension est appliquée à la cathode du canon à électrons et une perturbation de courant correspondante est de ce fait relevée dans un élément de l'amplificateur correctement choisi; cette perturbation secondaire étant ensuite transmise au moyen formant mémoire par l'intermédiaire de la liaison capacitive précitée.

C'est ce qu'exprime le procédé énoncé ci-dessus et qui définit l'invention.

La perturbation de tension .est commodément appliquée à une des grilles du canon à électrons et notamment la grille de commande dite $G_1$.

Par ailleurs, la phase de préparation consiste plus particulièrement à remplacer le signal vidéo appliqué à l'entrée de l'amplificateur (pendant un intervalle de temps prédéterminé qui sera appelé "durée de stabilisation") par un niveau constant de tension correspondant à un état bloqué du canon à électrons. En revanche, ce niveau constant de tension maintient la tension de sortie de l'amplificateur suffisamment proche de la tension de blocage pour que, sous l'effet de la perturbation appliquée sur la grille, le canon dépasse brusquement le seuil du noir et fonctionne en classe C, en réponse à cette impulsion de perturbation. Pendant la durée de stabilisation, le signal vidéo dépend de la luminosité moyenne de l'image qui précède le retour trame considéré, pendant lequel on insère le niveau de tension et le "remplacement" de ce signal vidéo peut s'effectuer simplement en court-circuitant le circuit d'entrée du signal vidéo (à haute impédance) à travers le circuit d'entrée du niveau constant de tension (à basse impédance), en amont de l'entrée de l'amplificateur.

L'invention sera mieux comprise et d'autres buts, détails et avantages de celle-ci apparaîtront mieux à la lumière de la description explicative qui va suivre d'un dispositif de correction automatique de la tension de blocage d'un canon à électrons, faite en référence aux dessins non limitatifs annexés dans lesquels:

— la figure 1 est un schéma-bloc d'un dispositif conforme à l'invention,
— la figure 2 est un chronogramme illustrant le processus séquentiel permettant de réactualiser l'état du moyen formant mémoire inséré dans une boucle de contre-réaction du dispositif de l'invention;
— et la figure 3 est un schéma détaillé du dispositif conforme au schéma-bloc de la figure 1.

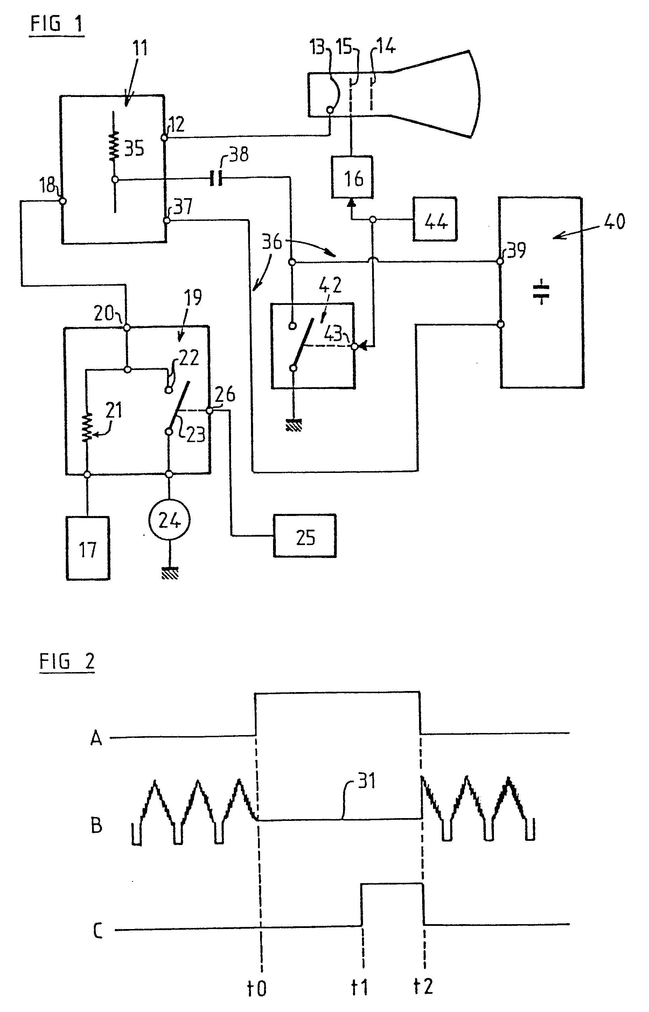

En se référant plus particulièrement à la figure 1, on a représenté un amplificateur de signal de modulation 11 dont la sortie 12 est connectée à la cathode 13 d'un canon à électrons 14 d'un tube de télévision en couleurs. Une grille 15 (de préférence la grille dite $G_1$) est connectée à un générateur de signal de perturbation 16. Par ailleurs, le circuit de luminance 17 est relié à l'entrée 18 de l'amplificateur 11 par l'intermédiaire d'un générateur de signal de stabilisation 19; la sortie 20 de ce générateur étant connectée à l'entrée 18. Ce générateur de signal de stablisation comporte un circuit d'entrée à haute impédance 21 (symbolisé par une résistance sur la figure 1) auquel est appliqué le signal de modulation à amplifier, délivré par le circuit de luminance 17 et un circuit d'entrée à basse impédance 22 comportant un moyen interrupteur commandé 23 auquel est connectée une source de tension continue 24 de valeur pré-déterminée. Le moyen interrupteur commandé 23 peut bien entendu être constitué par un simple transistor fonctionnant en saturé-bloqué. Le circuit à haute impédance 21 est connecté au circuit à basse impédance 22 (et à l'entrée 18) en aval dudit moyen interrupteur 23, c'est-à-dire de l'autre côté de la source de tension 24. Un générateur d'impulsions 25 est relié à une entrée de commande 26 dudit moyen interrupteur 23; pour commander la fermeture de ce dernier pendant toute la durée d'une impulsion délivrée par le générateur 25. En fait, on peut dire que le générateur de signal de stabilisation forme un moyen de substitution permettant de remplacer le signal de modulation appliqué au circuit d'entrée à haute impédance par la tension constante de la source 24, à l'entrée 18 de l'amplificateur 11 et pendant toute la durée de fermeture du moyen interrupteur 23. En effet, étant donné la grande différence d'impédance entre les circuits d'entrée 21 et 22, la fermeture du moyen interrupteur 23 permet non seulement d'appliquer la tension constante de la source 24 à l'entrée 18 de l'amplificateur mais aussi de court-circuiter le signal vidéo transmis par le circuit de luminance 17. Ce phénomène est illustré par le chronogramme de la figure 2 où la courbe A représente une impulsion délivrée par le générateur 25 et la courbe B la forme du signal observé pendant la même période de temps (la durée de stabilisation précitée) à l'entrée 18 de l'amplificateur 11. On voit que le signal vidéo est supprimé pendant toute la durée de l'impulsion A (intervalle de temps $t_0$—$t_2$) et remplacé par un palier de tension 31. Ce dernier, qui est déterminé par la source de tension 24 est calibré à une valeur telle que la tension de sortie de l'amplificateur 11 se stabilise à une valeur donnée.

Par ailleurs, on choisit dans l'amplificateur 11 un composant (une résistance 35 dans l'exemple décrit) dont on sait qu'il sera sensible à une perturbation provoquée par le générateur 16 et transmise par la cathode 13 à l'amplificateur 11. Ce composant constitue le point de départ d'une boucle de contre-réaction 36 connectée à une entrée de régulation 37 de l'amplificateur 11. Une tension appliquée à cette entrée 37 détermine al polarisation continue d'un étage de l'amplificateur 11 et par là même le tension de blocage du canon à électrons si l'amplificateur est à liaisons directes, ce qui est le cas en pratique. La boucle de contre-réaction est reliée à la résistance 35 par un condensateur 38 établissant la liaison capacitive mentionnée plus haut avec l'entrée 39 d'un moyen formant mémoire 40. La sortie 41 de ce dernier est directement reliée à l'entrée de régulation 37. En outre, un moyen interrupteur commandé 42 est connecté entre l'entrée 39 et la masse. Ce moyen interrupteur est normalement fermé pour invalider l'entrée 39 et pour relier l'une des bornes de condensateur 38 à la masse. Lorsqu'un signal de commande est appliqué sur l'entrée 43 de ce moyen interrupteur, la liaison avec la masse disparaît et la boucle de contre-réaction se trouve effectivement active pendant une période de mesure (ou période d'échantillonnage) mentionnée plus haut, c'est-à-dire tout le temps qu'un signal reste appliqué sur l'entrée 43. Ce signal est une impulsion fournie par un générateur d'impulsions 44 qui est aussi connecté au générateur de signal de perturbation 16 pour piloter ce dernier. La courbe C de la figure 2 montre l'allure de ce signal de commande engendré par le générateur 44. Il s'agit d'une impulsion apparaissant pendant l'intervalle de temps $t_1$—

$t_2$ à la fin du signal de stabilisation. Autrement dit, le système est réglé pour que l'état de l'amplificateur 11 et la charge du condensateur 38 soient stabilisés à l'apparition de l'impulsion du générateur 44 commandant à la fois la perturbation et le début de la période de mesure pendant laquelle la boucle de contre-réaction 36 devient effectivement active. Bien entendu, lesgénérateurs 25 et 44 peuvent comporter des parties de circuit communes puisqu'ils doivent être synchronisés et réglés l'un par rapport à l'autre pour que le signal de perturbation soit plus court en durée que le signal de stabilisation et qu'il survienne après l'apparition de ce dernier, de préférence vers la fin de sa durée. Le fonctionnement du dispositif est le suivant.

Pendant l'intervalle de temps $t_0$—$t_1$, l'entrée de régulation 37 reçoit un signal de consigne défini pendant le cycle précédent (c'est-à-dire au moment du precédent retour trame) et l'entrée 18 reçoit un palier de tension 31 qui stabilise le point de fonctionnement de l'amplificateur 11 (élimination des fluctuations vidéo) et la charge du condensateur 38. La stabilisation de la charge de condensateur est achevée à l'instant $t_1$. A ce moment, le moyen interrupteur 42 s'ouvre. Si toutes choses restent égales par ailleurs, aucun signal ne serait transmis au moyen formant mémoire 40. Cependant, une perturbation est alors appliquée à la grille 15 par le générateur de signal de perturbation 16. Cette perturbation se traduit par une variation de courant à la sortie 12 de l'amplificateur 11, laquelle se répercute dans la résistance 35 et est transmise par le consensateur 38 au moyen formant mémoire 40. L'état de ce dernier est donc "ré-actualisé" pour piloter l'entrée de régulation 37 et maintenir la composante continue fournier par l'amplificateur 11 à la valeur de tension de blocage requise.

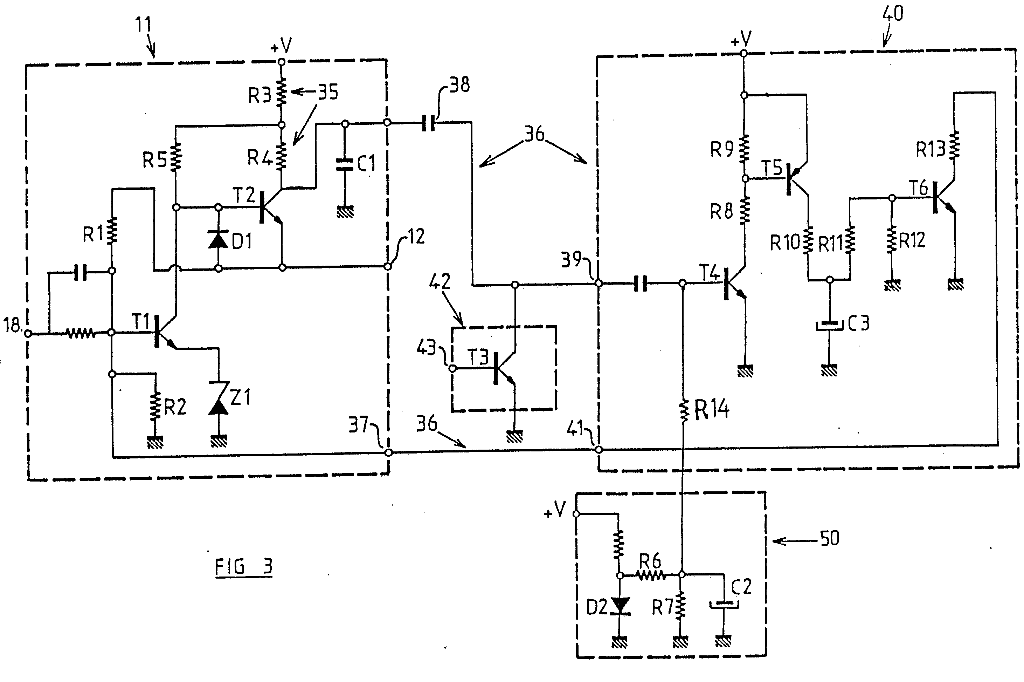

La figure 3 illustre un agencement particulier d'amplificateur vidéo associé à sa boucle de contre-réaction à liaison capacitive; le générateur de signal de stabilisation et le générateur de signal de perturbation étant omis. Les éléments déjà décrits en référence à la figure 1 portent les mêmes chiffres de référence.

L'amplificateur 11 comporte deux transistors T1 et T2. L'entrée 18 est reliée à la base du transistor T1 et le collecteur de ce dernier est relié à la base du transistor T2. La tension d'émetteur de transistor T1 est stabilisée par une diode Zener Z1. La sortie 12 de l'amplificateur est connectée à l'émetteur de transistor T2. Une diode D1 est connectée entre son émetteur et sa base. Une contre-réacton en tension est obtenue par un pont résistif R1—R2; la résistance R1 étant reliée entre la sortie 12 et la base du transistor T1 et la résistance R2 étant reliée entre cette base et la masse. Cette contre-réaction assure à la fois la valeur de repos de la tension de sortie et une faible impédance de sortie. La résistance 35 mentionnée plus haut est connectée entre le collecteur du transistor T2 et une source de tension d'alimentation +V. Elle est en fait constituée de deux résistance R3 et R4 montées en série et dont le point milieu est connecté à la base du transistor T2 par l'intermédiaire d'une résistance R5. La résistance 35 (R3+R4) est le composant sensible à la perturbation qui a été choisie dans ce type d'amplificateur. En effet, lorsqu'une variation de courant est appliquée à l'émetteur du transistor T2, le système réagit pour maintenir la tension de sortie et la perturbation est canalisée sur la résistance 35 par l'intermédiaire du transistor T2. Le montage constitué par les résistances R3, R4 et R5 forme un circuit de compensation tendant à réagir aux variations de la tension de sortie de l'amplificateur résultant de l'action même de la boucle de contre-réaction au moment où celle-ci est réellement active. On risque en effet des phénomènes d'oscillation (accrochages) suivant le sens et l'amplitude de ces variations internes. On montre que la compensation est optimale pour

$$R3=(R3+R4)\ R5/R1$$

Ainsi, les variations de la tension de sortie transmises au moyen formant mémoire à travers la liaison capacitive restent essentiellement représentatives de la perturbation du courant cathodique. Le collecteur de transistor T2 est relié par le condensateur 38 à la boucle de contre-réaction 36. Un autre condensateur C1 placé entre le collecteur du transistor T2 et la masse joue le rôle de filtrage haute fréquence. Le moyen interrupteur 42 est constitué par un transistor T3 dont le collecteur est relié à l'autre borne du condensateur 38 et dont l'émetteur est relié à la masse. L'entrée de commande 43 mentionnée plus haut est constituée par la base de ce transistor T3. Le point commun entre le condensateur 38 et le collecteur du transistor T3 est relié à l'entrée 39 du moyen formant mémoire 40 qui comporte un étage amplificateur à seuil (transistors T4 et T5). La base du transistor T4 est en effet polarisée à la limite de la conduction à l'aide du circuit à seuil 50 constitué d'une diode D2, d'un pont résistif diviseur R6—R7 et d'un condensateur de découplage C2. Le point milieu du pont résistif R6—R7 est relié à la base du transistor T4 par l'intermédiaire d'une résistance R14. Il est à noter que l'impédance d'entrée de l'étage amplificateur constitué par les transistors T4 et T5 est élevée de sorte que la constante de temps que forme le condensateur 38 avec cette impédance d'entrée (considérée bien entendu pendant une période de mesure correspondant au blocage du transistor T3) est élevée et notamment beaucoup plus élevée que la constante de temps définie par le même condensateur et la résistance 35 (considérée cette fois en dehors d'une période de mesure, lorsque le transistor T3 est saturé). Le collecteur du transistor T4 est relié à un pont résistif diviseur R8—R9 dont le point milieu est connecté à la base du transistor T5. Ce transistor est du type PNP et son émetteur est donc relié à la tension d'alimentation +V. Le collecteur du transistor T5 est relié à un condensateur C3 (par l'intermédiaire d'une résistance R10) qui constitue la partie vitale de l'élément formant mémoire 40 puisque c'est l'état de charge de ce condensateur (dont l'autre borne est connectée à la masse) qui conditionne la valeur de la consigne à l'entrée de régulation 37. Le point commun de la résistance R10 et du condensateur C3 est relié à la base d'un transistor T6 par l'intermédiaire d'un pont diviseur résistif R11—R12. En dehors des périodes de blocage du transistor T3, le condensateur C3 polarise donc la base du transistor T6. Le collecteur de ce transistor est relié à l'entrée de régulation 37 par l'intermédiaire d'une résistance R13 de sorte que l'état de conduction de ce transistor T6 fournit la valeur de consigne appliquée à l'entrée de régulation 37.

Bien entendu, l'invention n'est pas limitée au mode de réalisation qui vient d'être décrit, elle comprend tous les équivalents techniques des moyens mis en jeu, si ceux-ci le sont dans le cadre des revendications qui suivent.

**Revendications**

1. Procédé de correction de la tension de blocage d'un canon à électrons (14), normalement modulé par sa cathode (13) par l'intermédiaire d'un amplificateur (11) connecté à ladite cathode pour lui transmettre un signal de modulation et une composante continue, du type consistant à ré-ajuster périodiquement ladite composante continue par contre-réaction en chargeant périodiquement à une valeur de consigne actualisée un moyen formant mémoire (40) de ladite contre-réaction, relié en permanence à des moyens de polarisation dudit amplificateur, caractérisé en ce qu'il consiste:

— à stabiliser momentanément le point de fonctionnement de l'amplificateur (11) au voisinage de la tension de blocage,
— à produire une perturbation du courant cathodique dudit canon à électrons, dans un sens tel que le canon passe à la conduction en dépassant brusquement le seuil dunoir,
— à relever, dans l'amplificateur, un signal transitoire correspondant à ladite perturbation et à utiliser ce signal transitoire, sans composante continue, pour charger ledit moyen formant mémoire.

2. Procédé selon la revendication 1, caractérisé en ce que ledit signal transitoire est transmis audit moyen formant mémoire à travers un condensateur (38).

3. Procédé selon la revendication 1 ou 2, caractérisé en ce que la phase consistant à stabiliser le point de fonctionnement de l'amplificateur (11) consiste à remplacer le signal d'entrée par un niveau constant de tension correspondant à un état prédéterminé dudit canon à électrons (14).

4. Dispositif de correction de la tension de blocage d'un canon à électrons (14) normalement modulé par sa cathode (13), un amplificateur de signal de modulation (11) ayant sa sortie (12) reliée à ladite cathode; du type comportant une boucle de contre-réaction (36) connectée à une entrée de régulation (37) de la polarisation continue dudit amplificateur et comportant un moyen formant mémoire (40) dont la sortie est reliée à ladite entrée de régulation (37) pour imposer en permanence une grandeur électrique de consigne à ladite entrée de régulation; l'entrée dudit moyen formant mémoire étant connectée à un moyen interrupteur (42) branché pour invalider cette entrée en dehors de périodes de mesure successives, caractérisé en ce qu'il comporte:

— un générateur de signal de stabilisation (19) dont une sortie est reliée à l'entrée (18) dudit amplificateur,
— un générateur de signal de perturbation (16) de conduction dudit canon relié audit tube cathodique; les deux générateurs étant réglés et synchronisés pour que le signal de perturbation soit plus court en durée que le signal de stabilisation et qu'il survienne après l'apparition de ce dernier, et
— une liaison capacitive (38) établie entre ladite boucle de contre-réaction et un élément choisi (35) dudit amplificateur, sensible à une perturbation provoquée par ledit générateur de signal de perturbation (16).

5. Dispositif selon la revendication 4, caractérisé en ce que ledit générateur de signal de perturbation est relié à une grillte (15) dudit canon à électrons (14).

6. Dispositif selon la revendication 4 ou 5, caractérisé en ce que ledit générateur de stabilisation (19) forme un moyen de substitution, pour remplacer ledit signal de modulation par une tension continue de valeur prédéterminée à l'entrée dudit amplificateur (11).

7. Dispositif selon la revendication 6, caractérisé en ce que ledit générateur de signal de stabilisation (19) comporte un circuit d'entrée à haute impédance (21) auquel est appliqué ledit signal de modulation, un circuit d'entrée à basse impédance (22) comportant un moyen interrupteur commandé (23) et auquel est reliée une source de tension continue (24) de valeur prédéterminée, le circuit d'entrée à haute impédance en aval dudit moyen interrupteur commandé, et une entrée de commande (26) de ce moyen interrupteur reliée à un générateur d'impulsions (25).

8. Dispositif selon l'une des revendications 4 à 7, caractérisé en ce que ledit élément choisi (35) dudit amplificateur est une résistance de son étage de sortie.

9. Dispositif selon la revendication 8, caractérisé en ce que ladite résistance (35) et le condensateur (38) de ladite liaison capacitive définissent entre eux une constante de temps faible par rapport à la constante de temps définie par ledit condensateur (38) et l'impédance d'entrée dudit moyen formant mémoire 40.

**Patentansprüche**

1. Verfahren zum Korrigieren der Sperrspannung einer Elektronenkanone (14), die normalerweise an ihrer Katode (13) durch einen Verstärker (11) moduliert wird, der mit der Katode verbunden ist, um an sie ein Modulationssignal und eine Gleichkomponente anzulegen, derjenigen Art, die darin besteht, periodisch die genannte Gleichkomponente durch Gegenkopplung nachzustellen, indem periodisch eine einen Speicher bildende Einrichtung (40) der genannten Gegenkopplung auf einen aufgefrischten Sollwert aufgeladen wird; wobei diese Einrichtung dauernd mit Polarisationsmitteln des genannten Verstärkers verbunden ist, dadurch gekennzeichnet, daß es darin besteht, daß:

— kurzzeitig der Arbeitspunkt des Verstärkers (11) in der Nähe der Sperrspannung stabilisiert wird,
— eine Störung des Katodenstroms der Elektronenkanone in einem solchen Sinne verursacht wird, daß die Kanone in ihren Leitungszustand geht und den Schwarzschwellwert plötzlich überschreitet,
— daß in dem Verstärker ein vorübergehendes Signal, welches der genannten Störung entspricht, erfaßt wird und dieses vorübergehende Signal ohne Gleichkomponente verwendet wird, um die den Speicher bildende Einrichtung aufzuladen.

2. Verfahren nach Anspruch 1, dadurch gekennzeichnet, daß das vorübergehende Signal zu der den Speicher bildenden Einrichtung über einen Kondensator (38) übertragen wird.

3. Verfahren nach Anspruch 1 oder 2, dadurch gekennzeichnet, daß die Phase, die darin besteht, den Arbeitspunkt des Verstärkers (11) zu stabilisieren, darin besteht, daß das Eingangssignal ersetzt wird durch einen Konstantspannungspegel, welcher einem vorbestimmten Zustand der Elektronenkanone (14) entspricht.

4. Vorrichtung zur Korrigieren der Sperrspannung einer Elektronenkanone (14), die normalerweise an ihrer Katode (13) moduliert ist, mit einem Modulationssignalverstärker (11), dessen Ausgang (12) mit der genannten Katode verbunden ist; derjenigen Art, die eine Gegenkopplungsschleife (36) umfaßt, welche an einen Regeleingang (37) zum Einstellen der Gleichspannungspolarisation des genannten Verstärkers angeschlossen ist und eine einen Speicher bildende Einrichtung (40) umfaßt, deren Ausgang mit dem genannten Regeleingang (37) verbunden ist, um an den genannten Regeleingang dauernd eine elektrische Sollwertgroße anzulegen; wobei der Eingang der den Speicher bildenden Einrichtung an eine Unterbrechereinrichtung (42) angeschlossen ist, die so geschaltet ist, daß sie diesen Eingang außerhalb der aufeinanderfolgenden Meßperioden sperrt, dadurch gekennzeichnet, daß sie enthält:

— einen Stabilisierungssignalgenerator (19), wovon ein Ausgang mit dem Eingang (18) des genannten Verstärkers verbunden ist,
— einen Störsignalgenerator (16) zur Störung des Leitungszustandes der genannten Kanone, welcher mit der genannten Katodenstrahlröhre verbunden ist, wobei die beiden Generatoren so eingestellt und synchronisiert sind, daß das Störsignal eine geringere Dauer als das Stabilisierungssignal hat und nach dem Erscheinen des letztgenannten auftritt,
— eine kapazitive Verbindung (38) zwischen der genannten Gegenkopplungsschleife und einem ausgewählten Element (35) des genannten Verstärkers, welches auf eine Störung anspricht, die durch den genannten Störsignalgenerator (16) hervorgerufen wird.

5. Vorrichtung nach Anspruch 4, dadurch gekennzeichnet, daß der Störsignalgenerator mit einem Gitter (15) der Elektronenkanone (14) verbunden ist.

6. Vorrichtung nach Anspruch 4 oder 5, dadurch gekennzeichnet, daß der genannte Stabilisierungsignalgenerator (19) eine Substitutionseinrichtung bildet, um das genannte Modulationssignal zu ersetzen durch eine Gleichspannung vorbestimmten Wertes am Eingang des Verstärkers (11).

7. Vorrichtung nach Anspruch 6, dadurch gekennzeichnet, daß der genannte Stabilisierungssignalgenerator (19) eine Eingangsschaltung hoher Impedanz (21) umfaßt, an die das genannte Modulationssignal angelegt ist, und eine Eingangsschaltung (22) niedriger Impedanz umfaßt, die eine gesteuerte Unterbrechereinrichtung (23) aufweist und womit verbunden sind eine Gleichspannungsquelle (24) vorbestimmten Wertes, der Eingangskreis hoher Impedanz, welcher hinter der gesteuerten Unterbrechereinrichtung liegt, und ein Steuereingang (26) dieser Unterbrechereinrichtung, welcher mit einem Impulsgenerator (25) verbunden ist.

8. Vorrichtung nach einem der Ansprüche 4 bis 7, dadurch gekennzeichnet, daß das ausgewählte Element (35) des Verstärkers ein Widerstand seiner Ausgangsstufe ist.

9. Vorrichtung nach Anspruch 8, dadurch gekennzeichnet, daß der genannte Widerstand (35) und der Kondensator (38) der genannten kapazitiven Verbindung miteinander eine Zeitkonstante definieren, die klein ist verglichen mit der Zeitkonstante, die durch den Konden-

## 0 022 412

sator (38) und die Eingangsimpedanz der den Speicher bildenden Einrichtung (40) definiert ist.

## Claims

1. Method for correcting the disabling voltage of an electron gun (14) normally modulated at its cathode (13) through an amplifier (11) connected to said cathode for transmitting a modulation signal and a continuous component thereto, of the type consisting in periodically readjusting said continuous component by feedback and periodically charging memory forming means (40) of said feedback to a refreshed set value; permanently connected to polarization means of said amplifier, characterized in that it consists in:

— momentarily stabilizing the operating point of said amplifier (11) in the neighbourhood of said disabling voltage,
— producing a disturbance of the cathode current of said electron gun in such a sense that the gun becomes conductive and suddenly exceeds the black threshold,
— detecting a transient signal within said amplifier corresponding to said disturbance and using this transient signal without continuous component for charging said memory forming means.

2. Method in accordance with claim 1, characterized in that said transient signal is transmitted to said memory forming means through a capacitor (38).

3. Method in accordance with claims 1 or 2, characterized in that said phase consisting in stabilizing the operating point of the amplifier (11) consists in replacing the input signal by a constant voltage level corresponding to a predetermined state of said electron gun (14).

4. Device for correcting the disabling voltage of an electron gun (14) normally modulated at its cathode (13), a modulation signal amplifier (11) having its output (12) connected to said cathode; of the type comprising a feedback loop (36) connected to a control input (37) controlling the continuous polarization of said amplifier, and comprising memory forming means (40) the output of which is connected to said control input (37) for permanently imposing an electric set value upon said control input; the input of said memory forming means being connected to interrupter means (42) connected for disabling said input outside successive measurement periods, characterized in that it comprises:

— a stabilizing signal generator (19) one output of which is connected to the input (18) of said amplifier,
— a disturbance signal generator (16) for disturbing the conduction of said gun connected to said cathode ray tube; the two generators being adjusted and synchronized in a manner that the disturbance signal has a shorter duration than the stabilizing signal and occurs after the appearance of the latter, and
— a capacitive connection (38) between said feedback loop and a selected member (35) of said amplifier which is responsive to a disturbance caused by said disturbance signal generator (16).

5. Device in accordance with claim 4, characterized in that said disturbance signal generator is connected to a grid (15) of said electron gun (14).

6. Device in accordance with claims 4 or 5, characterized in that said stabilizing generator (19) forms substitution means for replacing said modulation signal by a continuous voltage of predetermined value at the input of said amplifier (11).

7. Device in accordance with claim 6, characterized in that said stabilizing signal generator (19) comprises a high impedance input circuit (21) to which said modulation signal is applied, a low impedance input circuit (22) comprising controlled interrupter means and to which are connected a continuous voltage source (24) of predetermined value, the high impedance input circuit downstream from said controlled interrupter means, and a control input (26) of this interrupter means connected to a pulse generator (25).

8. Device in accordance with any of claims 4 to 7, characterized in that said selected member (35) of said amplifier is a resistor of its output stage.

9. Device in accordance with claim 8, characterized in that said resistor (35) and said capacitor (38) of the capacitive connection define a time constant with each other which is small in comparison to the time constant defined by said capacitor (38) and the input impedance of said memory forming means (40).

# 0 022 412

## FIG 1

## FIG 2

1

FIG 3